# EUROPEAN PATENT SPECIFICATION

(11) **EP 3 187 020 B1**
(45) Date of publication and mention of the grant of the patent: **21.11.2018**
(21) Application number: 14766979.0
(22) Date of filing: 16.09.2014
(51) Int. Cl.: H04W 4/10, H04W 4/90

(54) **USER DEVICE AND METHOD THEREOF**
BENUTZERVORRICHTUNG UND -VERFAHREN DAFÜR
DISPOSITIF UTILISATEUR ET PROCÉDÉ CORRESPONDANT

(43) Date of publication of application: 05.07.2017
(73) Proprietor: Huawei Technologies Co., Ltd., Longgang Shenzhen, Guangdong 518129 (CN)
(72) Inventor: SCHMITT, Peter, S-164 40 Kista (SE); HERRERO VERON, Christian, S-164 40 Kista (SE); LAVASANI, Shahab, S-164 40 Kista (SE)
(74) Representative: Pfenning, Meinig & Partner mbB
(86) International application number: PCT/EP2014/069701
(87) International publication number: WO 2016/041579

(56) References cited:
- WO-A1-2014/130153
- US-A1- 2014 198 708
- ZTE: "Study on D2D Resource Allocation for Out of Network Coverage Scenario", 3GPP DRAFT; R1-140271 D2D COMM RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735821, Retrieved from the Internet: URL:http://www.3gpp.org/ftp/Meetings_3GPP_ SYNC/RAN/RAN1/Docs/ [retrieved on 2014-02-09]
- HOME OFFICE: "Proposal to re-structure the MCPTT document to accommodate Additional Media", 3GPP DRAFT; S1-143174 PROPOSAL TO RE-STRUCTURE THE MCPTT DOCUMENT TO ACCOMODATE ADDITIONAL MEDIA, 3RD GENERATION PARTNERSHIP PROJECT (3GPP), MOBILE COMPETENCE CENTRE ; 650, ROUTE DES LUCIOLES ; F-0692 , vol. SA WG1, no. Sophia-Antipolis, France; 20140818 - 20140822 18 August 2014 (2014-08-18), XP050803886, Retrieved from the Internet: URL:http://www.3gpp.org/ftp/Meetings_3GPP_ SYNC/SA1/Docs/ [retrieved on 2014-08-18]
- NOKIA ET AL: "D2D Communication without network coverage", 3GPP DRAFT; R1-134535, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717638, Retrieved from the Internet: URL:http://www.3gpp.org/ftp/tsg_ran/WG1_RL 1/TSGR1_74b/Docs/ [retrieved on 2013-09-28]

## Description

### Technical Field

The present invention relates to a user device for wireless communication systems. Furthermore, the present invention also relates to a corresponding method, a computer program, and a computer program product.

### Background

Group communication refers to communication within groups of three or more users which means that a great number of users can participate in the same communication. This form of communication is sometimes referred as one-to-many communication. Group communication implies exchange of information/data within the group and this information can be of different types, e.g., verbal or by speech, visuals, signals, writing, etc. Group communication requires a sender and one or more receivers and can be achieved by means of technologies like e-mail, voice-group calls, broadcast voice calls, etc.

Today, public safety systems provide group communication for special groups such as firemen, police, and ambulance personal, i.e. for emergency services. The demands of emergency services leave no room for compromise, and therefore reliable and robust communications are essential in ensuring fast and effective response and coordination of government and public safety organizations during emergency situations and incidents.

However, public safety systems have a very limited market by nature and it is envisioned that non-public safety use could also be possible so that a telecommunication operator would be able to market and gain economies of scale by allowing any group of people to benefit of the advantages provided by public safety systems if e.g. public safety functionality is integrated into commercial group communication technology. Group communication and point-to-multipoint scenarios in existing public safety systems when a user/subscriber request his wish to transmit information (e.g. by pushing a button) can result in a mixture of voice or corrupted signal by all the other recipients if at least one user is already sending information.

The user who indicates his wish to transmit information cannot receive data on the communication channel due to his own transmission in non-network controlled scenarios. In network controlled group communication broadcast scenarios, floor control is possible and in use today. In non-network controlled scenarios, a second transmitter or transmitter request, when already some broadcast information is distributed results in that the request of the second/new transmitter disturbs the broadcasting of the current transmitter.

Floor control is commonly used in telecommunications when referring to communication of multiple parties in a call. None floor control means that everybody can talk at any time, i.e. conference calls, and it is up to the participants to coordinate. With floor control participants requests the right to speak and equipment in the network connects the voice of the participant and all other users can hear the user "having the floor". The network can perform this by a first come first serve algorithm (or any other algorithm) and/or in addition by taking into account the participant or his type of request, such as emergency, priority, etc.

In Trans-European Truncated Radio (TETRA), in device-to-device communication if one user is transmitting voice and another user pushes the Push to Talk (PTT) button will hear a signal indicating that another user is transmitting/speaking. In 3GPP Long Term Evolution (LTE), for public safety scenarios, it is requested that point-to-multipoint communication shall be also possible when the connection to the network or parts of the network is broken. It is currently not described how subscribers will join group communication via LTE and how the network can take control of the functions a subscriber is allowed to perform.

Commercial cellular networks, e.g. based on the 3GPP standards, do provide group communication by means of exchange of voice and data and their market is very large targeting whole groups of population. Public safety systems however provide tailor-made group communication functionality as well as robust and reliable communication systems for government and public safety organizations during emergencies and incidents. Currently, in PTT communication coordination to avoid multiple talkers/users is coordinated by the user who wants to communicate.

For the GSM feature for group communication (i.e. GSM-R), if the second talker (a talker who gets the floor after the originator of the group call gave up his talker functionality) is talking and another user request talker functionality in the same cell as the current talker the voice of the current talker is corrupted.

In GSM a subscriber has subscriptions in the HLR (Home Location Register) for the different group calls he is allowed to join and setup. The network does not control who is listening, and the network only has control on subscribers who want to setup a group call or on subscribers who request talker functionality. In GSM, downlink channels can be encrypted and only the subscribers who have the keys can encrypt the voice on downlink channels. One possibility to provide the keys for group communication to the subscribers is with feature Over the Air (OTA) transport. For group communications where it is required to know who has taken part in the call (i.e. emergency calls in GSM-R (GSM variant for railways) special form of a group call) a subscriber who leaves such a group call calls a number and provides information to a special service centre. In the related setup message the subscriber provides information to which group call the subscriber was listening and how long. The group call service does not provide any information who is in the area and who objected to listen to the call.

3GPP TSG-RAN WG1 Meeting #76, R1-140271: "Study on D2D Resource Allocation for Out of Network Coverage Scenario" discusses cluster head based resource scheduling wherein a cluster head is used to pick resources for device-to-device communication between UEs from a resource pool.

3GPP TSG-SA WG1 Meeting #67, S1-143174: "Proposal to re-structure the MCPTT document to accommodate Additional Media" discusses modifying the Mission Critical Push To Talk Ts 22.179 in order to extend it to other media.

### Summary

An objective of embodiments of the present invention is to provide a solution which mitigates or solves the drawbacks and problems of conventional solutions.

The above and other objectives are achieved by the subject matter of the independent claims. Further advantageous implementation forms of the present invention can be found in the dependent claims.

It should be noted that an "or" in this disclosure and in the corresponding claims is to be understood as a mathematical OR which covers "and" and "or", and is not to be understand as an XOR (exclusive OR).

According to a first aspect of the present invention, the above mentioned and other objectives are achieved with a user device for communication in a wireless communication system, the user device comprising a transceiver configured for group communication with other user devices of a first group, wherein the first group is a non-network controlled communication group; the transceiver further being configured to:
transmit or receive data to or from the other user devices on a first radio channel, wherein the first radio channel is a data channel; and
transmit or receive first transmit requests to or from the other user devices on a second radio channel, wherein each first transmit request is a request for data transmission on the first radio channel and wherein the second radio channel is a signalling channel.

Network controlled group communication means that the network controls the group communication, e.g. who is allowed to participate, join, listen, talk, etc., which can be done by subscription checking or any other suitable control functions. Further, every action in network controlled group communication from by user is checked by the network before it is performed.

On the other hand none-network controlled group communication means that the network does not control the group communication. This also implies that the network does not perform any checks, such as the above mentioned subscription checking, which means that checking procedures are performed by the user devices participating in the group communication. Possible information about participation in a communication group and allowed actions may be stored in the user device.

By transmit or receive data to or from the other user devices of the first group on a first radio channel and transmit or receive first transmit requests to or from the other user devices on a second radio channel the present group communication solution can easily be implemented in current and future commercial wireless communication systems, such as 3GPP systems. This implies among other things economies of scale, low cost per user, use of existing allocated frequency bands for group communication. Also public safety functionalities can be implemented in existing wireless communication infrastructure with embodiments of the present invention.

Moreover, by using a first channel for data transmission (such as verbal or by speech, visuals, signals, writing, etc.) and a separate second channel for first transmit requests the resources of the data channel can easily be controlled thereby avoiding collisions. By avoiding or minimizing collisions on the data channel the data channel can be used more efficient.

Furthermore, embodiments of the present invention make possible the integration of public safety features in commercial wireless communication systems in an advanced manner.

Also, the transceiver further is configured to
receive second transmitter requests from user devices of a second group, wherein the second group is a network controlled communication group and wherein the second transmit requests are requests for transmission on the first radio channel, and
forward the second transmitter requests on the second radio channel to the other user devices.

This has the advantage that the user device can act as a relay node and forward transmission requests from the second group to the first group without interrupting ongoing data transmissions on the first channel. Thereby, the first channel may be used more efficiently and the transmission requests from the second group can be considered by the user devices of the first group.

In a first possible implementation form of the user device according to the first aspect, each first transmit request comprises an identity of a user device of the first group and a priority level.

An advantage with the first possible implementation form is that a transmit request is transmitted on an independent channel from the data transmissions and if multiple transmit requests are sent the user device(s) of the first group can check which other user device has requested transmission and which user device has the highest priority class thereby providing mechanism from improved channel use and channel use control.

In a second possible implementation form of the user device according to the first implementation form of the first aspect, the transceiver further is configured to
coordinate data transmissions on the first radio channel based on the priority levels of received first transmission requests.

An advantage with the second possible implementation form is that the user device can act as a group coordinator thereby coordinating the use of the first channel based on the priority levels of received first transmission requests. Hence, improved channel use and reduced collision rate is possible.

In a third possible implementation form of the user device according to any of the previous implementation forms of the first aspect or to the user device as such, the transceiver is configured to
receive first transmit requests on the second radio channel while transmitting data on the first radio channel.

An advantage with the third possible implementation form is that the user device can receive transmission requests from the other user devices and can decide to give up data transmissions on the first channel and allow other user device of the first group to transmit data on the first channel. This allows a more efficient use of the first channel since the handling the transmission requests are carried out on the separate second signalling channel.

In a fourth possible implementation form of the user device according to the first and third implementation forms of the first aspect, the transceiver is configured to
halt an ongoing data transmission on the first radio channel if a received first transmit request has a higher priority level than a priority level associated with the ongoing data transmission.

An advantage with the fourth possible implementation form is that the user device can receive transmission requests with higher priority from other user devices while transmitting on the first channel and halt an ongoing transmission. This means a more efficient use of the first channel as well as different priority level for prioritized traffic in the system is considered.

In a fifth possible implementation form of the user device according to any of the previous implementation forms of the first aspect or to the user device as such, the transceiver is configured to
receive the first transmit requests on the second radio channel while receiving data on the first radio channel.

An advantage with the fifth possible implementation form is that transmission requests from the other user devices do not disturb ongoing data reception on the first channel. This means more efficient use of the first channel and an ongoing reception of data from a current transmitter is not interrupted when another user device of the first group sends a transmission request.

In a sixth possible implementation form of the user device according to any of the previous implementation forms of the first aspect or to the user device as such, the transceiver further is configured to
transmit or receive busy indications to or from the other user devices on the second radio channel, wherein the busy indication comprises an identity of a user device transmitting data on the first radio channel and a priority level.

An advantage with the sixth possible implementation form is that the user device can inform the other user device of the first group of ongoing transmissions and the priority level thereof, or be informed about ongoing transmissions performed by other user device on the first channel. Thereby, the first channel may be used and shared more efficiently.

In a seventh possible implementation form of the user device according to the first aspect, the transceiver further is configured to
forward received first transmitter requests to the user devices of the second group.

An advantage with the seventh possible implementation form is that during an ongoing transmission on the first channel the user device acting as a relay node can forward transmission request from the none-network controlled communication group (the first group) to the network controlled communication group (the second group). Thereby, the first channel may be used more efficiently and the first transmission requests from the first group can be considered by the user devices of the second group.

In an eigth possible implementation form of the user device according to any of the previous implementation forms of the first aspect or to the user device as such, the first and the second radio channels are broadcast channels.

An advantage with the eigth possible implementation form is that data transmissions and signalling transmissions can be performed in parallel by different user devices of the first group. In other words, having the transmission requests and data on different broadcast channels (i.e. first and second channels) according to this implementation form allows parallel transmissions without disturbing each other since the first and the second radio channels are broadcast channels which means that all user device of the first group are informed about the activities of all the other user devices of the first group.

According to a second aspect of the invention, the above mentioned and other objectives are achieved by a method in a user device for communication in a wireless communication system, the user device being configured for group communication with other user devices of a first group, wherein the first group is a non-network controlled communication group; the method comprising the steps of:
transmitting or receiving data to or from the other user devices on a first radio channel, wherein the first radio channel is a data channel; and
transmitting or receiving first transmit requests to or from the other user devices on a second radio channel, wherein each first transmit request is a request for data transmission on the first radio channel and wherein the second radio channel is a signalling channel.

In a first possible implementation form of the method in the user device according to the first aspect, each first transmit request comprises an identity of a user device of the first group and a priority level.

In a second possible implementation form of the method in the user device according to the first implementation form of the second aspect, the method further comprises
coordinating data transmissions on the first radio channel based on the priority levels of received first transmission requests.

In a third possible implementation form of the method in the user device according to any of the previous implementation forms of the second aspect or to the method as such, the method further comprises
receiving first transmit requests on the second radio channel while transmitting data on the first radio channel.

In a fourth possible implementation form of the method in the user device according to the first and third implementation forms of the second aspect, the method further comprises
halting an ongoing data transmission on the first radio channel if a received first transmit request has a higher priority level than a priority level associated with the ongoing data transmission.

In a fifth possible implementation form of the method in the user device according to any of the previous implementation forms of the second aspect or to the method as such, the method further comprises
receiving the first transmit requests on the second radio channel while receiving data on the first radio channel.

In a sixth possible implementation form of the method in the user device according to any of the previous implementation forms of the second aspect or to the method as such, the method further comprises
transmitting or receiving busy indications to or from the other user devices on the second radio channel, wherein the busy indication comprises an identity of a user device transmitting data on the first radio channel and a priority level.

In a seventh possible implementation form of the method in the user device according to any of the previous implementation forms of the second aspect or to the method as such, the method further comprises
receiving second transmitter requests from user devices of a second group, wherein the second group is a network controlled communication group and wherein the second transmit requests are requests for transmission on the first radio channel, and
forwarding the second transmitter requests on the second radio channel to the other user devices.

In an eight possible implementation form of the method in the user device according to the seventh implementation form of the second aspect, the method further comprises
forwarding received first transmitter requests to the user devices of the second group.

In a ninth possible implementation form of the method in the user device according to any of the previous implementation forms of the second aspect or to the method as such, the first and the second radio channels are broadcast channels.

The advantages of embodiments of the present method in the user device are the same as those for the corresponding user device claims.

The present invention also relates to a computer program, characterized in code means, which when run by processing means causes said processing means to execute any method according to the present invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the present invention will be apparent from the following detailed description.

### Brief Description of the Drawings

The appended drawings are intended to clarify and explain different embodiments of the present invention, in which:
- Fig. 1 shows a user device according to an embodiment of the present invention;
- Fig. 2 shows a flow chart of a method in a user device according to an embodiment of the present invention;
- Fig. 3 illustrates user devices in a first group according to embodiments of the present invention; and
- Fig. 4 shows user devices of a first group and user devices of a second group.

### Detailed Description

As described above, commercial cellular networks today do not provide any support for group communication feature for public safety. Hence, specialized group communication technology is required in order to provide public safety functionality. Public safety systems provide communication for special groups such as firemen, police, and ambulance for which the market is rather limited as mentioned above. Also, these systems are independent, standalone and based on standards developed by e.g. Project 25 (P25) or TETRA.

Therefore, economies of scale or high level of investment is not possible compared to commercial cellular networks e.g. based on the 3GPP standards. In addition, public safety users cannot benefit the commercial cellular networks of low cost per user, high bit rates and additional communication services as well as public safety as users are required to use two different communications devices: one for their work and on for their personal use. Finally, only special groups of people can benefit the reliability and robustness of public safety functionality when this functionality actually could be provided to other communication groups.

The method in existing public safety systems is the following: a user/subscriber indicates his wish to transmit information (e.g. by pressing a button on his device, simple or multi-touch gesture on a touch screen, voice command, etc.). By indicating the wish to transmit the subscriber triggers a request for transmitting information towards the system and this blocks the channel for other communication. When the subscriber indicates his wish to transmit information and requests transmitter functionality he cannot listen anymore to the channel, so he is not aware that another person is doing the same at the same time. He only notice this when nobody replies to him or the dispatcher (e.g. a controller, i.e. group members with special rights) replies "more than one communication split". There is therefore a lack of control who is participating in a group communication according to conventional solutions. Embodiments of the present invention provide means for controlling group communication in non-network controlled group communication in an efficient manner.

The inventors have further realised that existing commercial technologies, such 3GPP-based technologies, can be enhanced in order to provide a much richer group communication experience than provided today. Integration of public safety functionality into commercial 3GPP communication technology can provide telecommunication operators gains in for example market by firstly adding a new group of potential subscribers (i.e., public safety users) and secondly by allowing any group of other subscribers to benefit of the advantages provided by public safety systems.

Additionally, public safety users could also benefit from an integration of public safety functionality into commercial cellular networks, e.g., low cost per user, high bit rates and additional communication services as well as a single device for all their communications needs. At the same time any user of current commercial cellular networks could benefit from using public safety functionality which provides reliable and robust communications for group communication.

Therefore, the present invention relates to a user device and a corresponding method in a user device which has the above stated and further advantages.

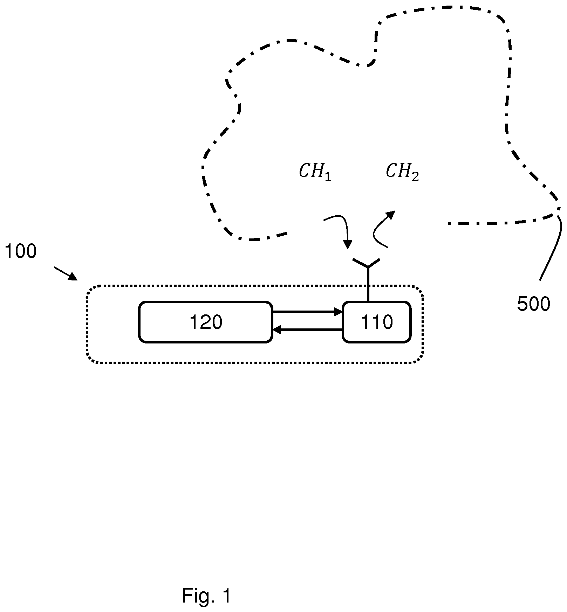

Fig. 1 shows an embodiment of a user device 100 according to the present invention for a wireless communication system 500. The user device 100 has the capabilities and functions to communicate with other communication devices in the wireless communication system 500, and the present user device 100 may e.g. be a User Equipment (UE) in a LTE system. The communication devices may be other user devices but may also be base stations, relay nodes, access points, etc.

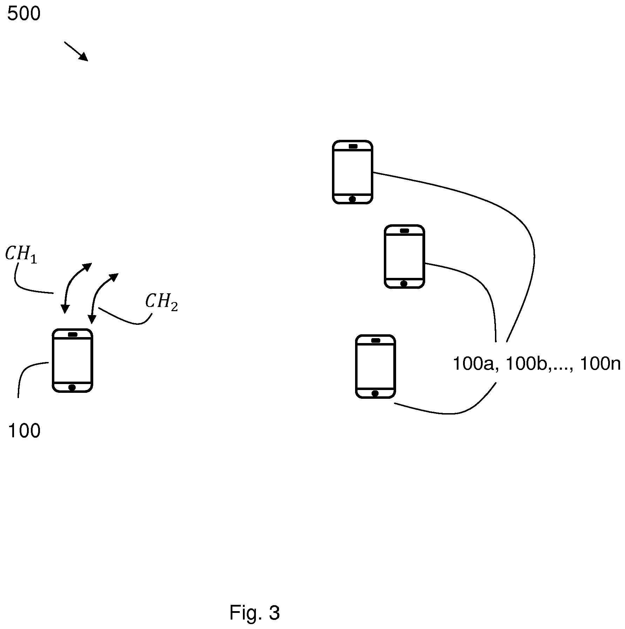

The user device 100 of Fig. 1 comprises a transceiver 110 configured for group communication with other user devices 100a, 100b,..., 100n of a first group which are illustrated in Fig. 3. This means that the transceiver 110 is configured and comprises the suitable capabilities and functions, which is described more in the following disclosure. Further, the first group is a non-network controlled communication group implying that the network does not control the communication within the first group. The transceiver 110 is further configured to transmit or receive data to or from the other user devices 100a, 100b,..., 100n on a first radio channel *CH*₁, and the first radio channel *CH*₁ being a data channel. The transceiver 110 is further configured to transmit or receive first transmit requests to or from the other user devices 100a, 100b,..., 100n in the first group on a second radio channel *CH*₂. Each first transmit request is a request for data transmission on the first radio channel and the second radio channel *CH*₂ is a signalling channel. In the exemplary embodiment in Fig. 1 the user device 100 also comprises a processor unit 120 communicably coupled with the transceiver 110.

The first *CH*₁*,* and second *CH*₂ channels may be enhanced Multimedia Broadcast Messaging System (eMBMS) like broadcast channels. An MBMS sort of feature, such as point-to-multipoint or one-to-many distribution mode, can allow the two channel principles to be realized. MBMS exists in GSM/UMTS from Rel-6 and eMBMS is the evolution for LTE based systems (from Rel-9). These two channel principle allows a more efficient use of given radio spectrum since data can be received and sent by many other user devices (alternative to unicast to a large number of user devices).

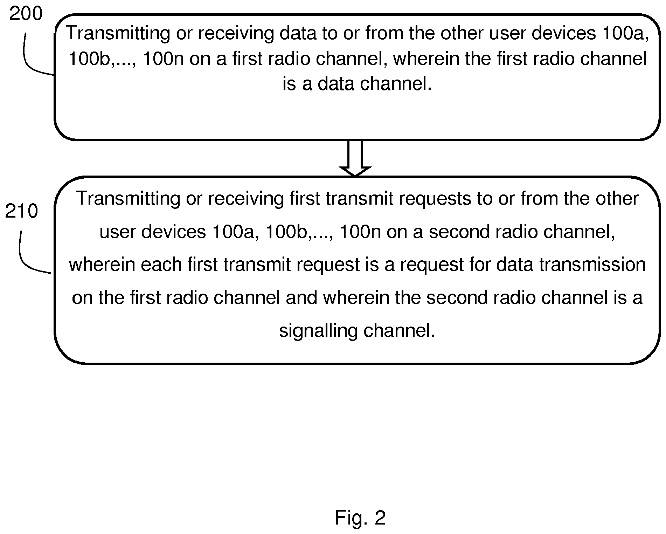

The corresponding method in a user device is illustrated in Fig. 2. The present method comprises transmitting or receiving 200 data to or from the other user devices 100a, 100b,..., 100n of the first group on a first radio channel. As aforementioned the first radio channel is a data channel. The method further comprises transmitting or receiving 210 first transmit requests to or from the other user devices 100a, 100b,..., 100n on a second radio channel which is a signalling channel. Further, each first transmit request is a request for data transmission on the first radio channel by user devices in the first group.

Fig. 3 illustrates user devices according to embodiments of the present invention in group communication in a wireless communication system 500. It is illustrated how the user device 100 of the first group transmits or receives data to or from the other user devices 100a, 100b,..., 100n of the first group on the first channel. It is further illustrated how the user device 100 transmits or receives first transmit requests to or from the other user devices 100a, 100b,..., 100n on the second channel.

When a user/subscriber request for transmission (e.g. push a button, simple or multi-touch gesture on a touch screen, voice command, etc.) he initiates the transmission of a first transmit request on the second signalling channel. The first transmit request comprises at least a request for data transmission on the first radio channel. However, the first transmit request may in one embodiment of the present invention comprise further information which is the identity of the user device 100 and a priority class/level.

If the user device 100 does not receive any data on the first channel and no other user device 100a, 100b,..., 100n in the first group has transmitted a first transmit request with higher priority on the second channel the user device 100 may start transmitting data on the first channel.

In an embodiment of the present invention the current transmitter sends busy indications on the second channel. The busy indication comprises an identity of the current transmitter so that the other user devices in the first group are informed that a user device 100 is transmitting on the first channel and the identity thereof. The busy indication can be periodically signalled on the second channel until the current transmitter has finished or decided to stop the transmission. Therefore, the transceiver 110 of the user device 100 is further configured to transmit or receive busy indications to or from the other user devices 100a, 100b,..., 100n. Each busy indication comprises an identity of a user device transmitting data on the first radio channel and a priority level or class for the transmission.

A user device 100 in transmit mode (i.e. transmitting data on the first channel) is also configured to listen to the second signalling channel while transmitting on the first channel. A user device 100 in receive mode (i.e. receiving data on the first channel) receiving a first transmitter request on the second channel may indicate the first request to the user/subscriber, i.e. on the display of the user device 100 so that the user/subscriber is aware of the first transmission request. Further, if another user device transmits a first transmit request having a higher priority class than the priority class for the transmission of the current transmitter the current transmitter should according to an embodiment of the present invention halt the ongoing data transmission on the first radio channel so as to free up the first channel to the user device with higher priority class.

If however a user device 100 is transmitting with the highest transmitter priority class and receives a first transmitter request with the same priority class the user device 100 could free up the first channel in a pre-defined time period to avoid that the first channel is accidently blocked, and to give the other user devices 100a, 100b,..., 100n in the first group the chance to make the user device aware of the situation that the user device is blocking the first channel. Therefore, to support different kinds of transmitter requests, different levels of transmitter request priority classes or levels are supported in the non-network controlled group communication according to an embodiment of the present invention. For example, the priority classes or levels can be group according to the following list from the lowest priority class to the highest priority class:
- Normal priority class, i.e. the lowest priority class;
- Network controlled transmitter priority class, i.e. priority classes a user device is allowed to use in transmission requests;
- Coordinator priority class. i.e. the priority class of a coordinator user device (see description below);
- Emergency priority class, i.e. the highest priority class, e.g. a subscriber in an emergency situation can send a request to transmit in emergency which triggers the current transmitter to stop transmitting and free the first channel.

Further, if more than one user device is requesting the transmitter functionality on the first channel at the same time, a group coordinator user device could request transmitter functionality with a higher priority (i.e. the above coordinator priority class) and coordinate the different transmit requests and its associated priority levels/classes from the user devices of the group.

Therefore, according to another embodiment of the present invention a group coordinator user device is supported, i.e. the user device 100 operates as a group coordinator. The group coordinator user device 100 is a user device belonging to the first group and has the capabilities to coordinate the different first transmit requests within the first group. This implies that the transceiver 110 of the user device 100 further may configured to coordinate data transmissions on the first radio channel based on the priority levels of received first transmission requests. The user device 100 could also be responsible for the allocation of the resources of first channel by implementing a suitable allocation algorithm.

Furthermore, for a user device 100 operating in group relay mode the user device 100 has to support, in addition to the possibility of forwarding first transmit requests from the first group to a second group, also forwarding second transmit requests from one or more user devices of a second group 300a, 300b,..., 300n to the first group. The second group is a network controlled communication group and the second transmit requests are requests for transmission on the first radio channel.

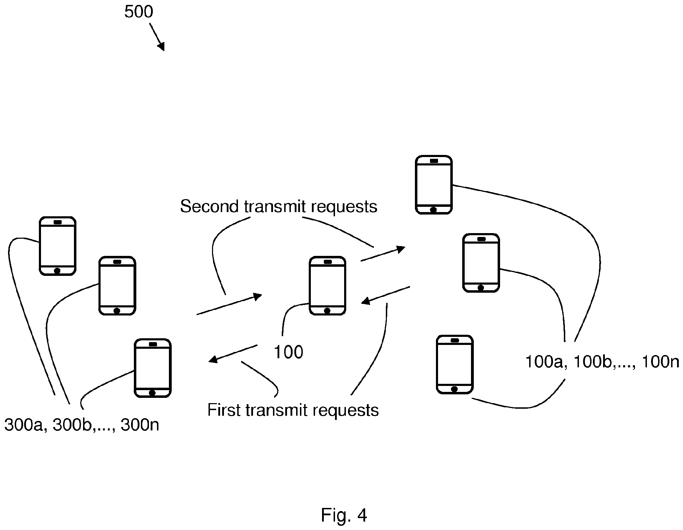

Fig. 4 illustrates this case when the user device 100 operates as a relay node. The user device 100 is in communication with other user devices of the first group and user devices of the second group, but the user devices of the first and second groups are not in communication with each other. The user device 100 operates in relay mode and in the first case receives second transmit request from the user devices 300a, 300b,..., 300n of the second group and forwards the second transmit request to the other user devices of the first group 100a, 100b,..., 100n. In the second case the user device 100 receives first transmit request from the other user devices 100a, 100b,..., 100n of the first group and forwards the first transmit request to the user devices of the second group 300a, 300b,..., 300n.

Furthermore, the delivery of the data/information within the first group should not be restricted, and therefore unicast or multicast delivery should be able to be used. Roaming of public safety service could be restricted to the network in which the subscriber belongs to unless the user device 100 is operating in relay mode.

Moreover, users/subscribers may need confidence in security of the group communication and therefore encryption and integrity protection are important aspects. Key management and distribution could provide secure keys management and distribution, and the latter can be achieved by e.g. Over-The-Air Rekeying (OTAR) or any other suitable key distribution. One issue in using encryption is that it may not always be possible to coordinate the security feature with other jurisdictions which may also provide help during emergency services or incidents since encryption may result in losing the benefit of interoperability if proprietary solutions are used rather than standards. It should be noted that one should not enable encryption if not all potential user devices have the same cryptographic key(s).

Regarding 3GPP technologies keys for public safety service could be provisioned in the user device 100 at manufacture e.g. in a non erasable memory or by an Open Mobile Alliance Device Management (OMA DM) or provision in the Universal Subscriber Identity Module (USIM) or by means of explicit signalling. Any of these methods would require updates to the current 3GPP standards. In the case of provisioning keys for public safety to the user devices, the Evolved Packet System (EPS) authentication procedure may be enhanced so that a new key set identifier is provided to the user device only for public safety use.

The use cases described in the following disclosure gives examples and benefits of using the present invention in cellular wireless communication networks. In order to ensure a successful integration these examples may introduce new requirements to the commercial cellular wireless communication networks, such as 3GPP networks.

Group communication is a point-to-multipoint communication meaning that a number of people/user/subscribers want to share information/data in some manner. The transmitter is called "talker" and the receivers are called "listener" in the below user cases even though the transmissions do not have to be speech or voice as described above. An ongoing communication is called a "group call". In a network controlled group communication the communication/call is controlled by the network in the group call server. The group call server holds all data in regards to a group, such as who is allowed to participate (listen and talk), allowed priority for talker requests, area restrictions, etc.

### Non public safety group communication use cases and requirements

### Use case 1:

In medical villages there can be a need of communication between members of the medical community in order to, e.g., exchange information, ideas, asking for advice, etc. The possible service can be provided by setting a number of different Group Call System Enabler (GCSE) groups using group communication. There can be need for not only receive information user-to-user but also multipoint communication (point-to-multipoint data communication). The information does not necessarily have to be voice but may also be multimedia, such as X-ray images or scanning of test results. The use of multimedia can provide a number of advantages, such as:
- The dispatchers (e.g. a controller, i.e. group members with special rights) can share patient test results, such as X-ray images, in real time.
- The dispatchers can also push video clips of, e.g., Magnetic Resonance Imaging (MRI) or Magnetic Resonance Angiography (MRA), to talkers or individuals.

Examples: Log of patient visits and patient history. Receiver group members could be administration staff and transmitter group members could be doctors or nurses who provide the log of patient visits as well as test for storage purposes. Exchange of information between different medical departments, which can be user-to-user or multipoint communication. A doctor or team can for example ask other colleague(s) for advice or information during surgery planning.

Group communication requirements:
- Only one talker allowed;
- The talker change in short time, to allow previous talker to become a listener; and
- Different priority levels for different talker requests.

### Use case 2:

A group of people located in a defined geographical area, not necessarily same location area, can be target for this type of group communication use case.

Example: A construction area can be considered as one use case. Consider a large construction project were hundreds of people are involved. Workers are located in different parts of the construction areas and the construction manager could be provided by means of communication to workers. The construction managers can play the role of dispatchers/controller and share mainly voice but also multimedia, e.g., by sharing plans in real-time to provide new day working plans or modifications of the project.

Example: A university campus can be considered as another use case that would benefit from using group communication feature among the members of the community for exchange of information/data. One potential scenario of deployment of this feature can be within a defined group of people or certain location in the university campus, e.g. the justice faculty. Justice campus could be a single site dedicated to justice faculty in the university campus where people working in this department can benefit from group communication feature for sharing information.

Example: Industry areas have currently their own communication system for their security and service personal. This could be replaced by LTE based group communication with network controlled floor control.

Example: Power line maintenance personal communication when a small number of people communicating with each other during checking of power lines (e.g. with helicopters) or doing reparations.

Group communication requirements:
- Only one talker allowed at the time;
- Talker change in short time, to allow previous talker to become a listener;
- Different kind of priorities for different talker requests (first transmit requests).

### Public safety and railway group communication use cases and requirements

### Use case 1:

Dispatcher is in an office for railways in a railway station. The dispatcher has a special terminal where he can have a number of calls at the same time with hold functionality for all of them. In the morning the dispatcher sets up a number of group calls (group call for train drivers, shunting, etc.) and puts all of them on hold on his user device. The group calls are still ongoing. He can join the group at any time when he has a need to talk to the group or when the group requests him to join. If he participates in the call he can talk in addition to the current talker. Having two talkers at the same time works only for voice communication, it cannot be supported for multimedia communication like video, pictures, data, etc.

Group communication requirements:
- More than one talker allowed but restricted to voice communication;
- Dispatcher can be out of the area of the group call;
- Dispatcher can talk at any time but restricted to voice communication.

### Use case 2:

Dispatcher is in a control centre and the common group call is active. The dispatcher gets an alarm of an ongoing disaster in an area. The dispatcher activates/informs/generates an alarm to the relief forces. The dispatcher assigns a group-call-identity to the incident/disaster and informs the relief forces which group call they should use for communication to avoid that there are blocking the common channel. Any member of the relief forces can start the group call at any time. There is more than one dispatcher in a group call. The chief officer at the disaster may have dispatcher functionality as well. Assumption, in the analogue systems the dispatcher at control centre is not able to join the group call at the incident, for digital system this should be possible. A dispatcher can request talker functionality with different priorities. If a dispatcher performs talker request as a dispatcher he pre-empts the current talker in normal talker priority. In this case the old talker becomes a listener.

Group communication requirements:
- Only one talker allowed;
- Dispatcher can be out of the area of the group call;
- The dispatcher has priority for talker request;
- The talker change in short time, to allow previous talker to become a listener.

### Use case 3:

During an incident some group members are entering an area without coverage, e.g. a small group of fire fighters entering a house and due to the house construction they lost coverage. A user device which is in contact with the group members out of coverage and in contact with the network can act as a relay node.

Group communication requirements:
- Only one talker allowed;
- Dispatcher/controller can be out of the area of the group call;
- The dispatcher/controller has priority for talker request;
- The talker change in short time, to allow previous talker to become a listener.

Moreover, the following disclosure explains and gives examples of the principles for network controlled group communication based in LTE systems with information exchange for group communication for UEs (corresponding to user devices) in relay mode and out of coverage case. It should however be noted that the present invention is not limited to LTE systems but can be implemented in other suitable wireless communication systems.

A subscriber who is allowed to perform group communication in LTE has to perform a two step registration when activating the UE, namely:
1) Register to the LTE network; and
2) Register to a group communication service.

When a subscriber wants to register to a group call service the group call server (the part of the network that handles or serves the communication group) checks if the subscriber is in a network in which he is allowed to perform group communication. If he is allowed his current location is stored in the group call server and it is checked which group calls the subscriber is allowed to join and if the newest encryption keys for the group calls are already provided to the subscriber. If this is not the case or the subscriber has indicated in his registration request that he has no encryption keys, the group call server provides the encryption keys for the group calls the subscriber is allowed to join. The group call server should start with those keys for the group calls which are ongoing for this subscriber and shall inform the subscriber that this group call is ongoing in his area. Depending on the Quality-of-Service (QoS) of the ongoing group calls the subscriber can take the proper action. The subscriber will receive a list of ongoing group calls and if someone is talking and who. For example, in networks where it is mandatory to join emergency calls the subscriber is automatically connected to an emergency call.

When a subscriber joins a group call the group call server is informed about the subscriber who has joined and his location. A subscriber who changes his location shall inform the group communication server about his new location. The granularity when a subscriber has to provide his location information is operator specific. The group call dispatcher can change the granularity depending on the group call scenario and how exact he needs the location of the group call members.

When a subscriber registers to a group call service he also gets the details on group communication when out of coverage of the network (group communication without network control): frequency, bandwidth, encryption key, etc.

The dispatchers in the control centre are in control of each group call and can terminate group calls, trigger to change the encryption key, remove a subscription of a group call, and so on. For example, if removal of a subscription for a group call fails the dispatcher can change the encryption key for that group call in a two step approach: distribute the new key to the subscribers who are still allowed to receive data in the group call in a first step, and in a second step restart the group call. During ongoing calls (or communication) the identity of the current talker (or transmitter) is provided to every receiver of the group communication data.

Embodiments of the user device 100 according to the present invention may be any wireless communication device with the capabilities to communicate with a radio communication network and with other communication devices, such as UEs in LTE systems. The user device 100 can e.g., be a laptop, mobile phone, tablet computer, smart phone, etc.

Furthermore, any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present user device comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processors of the present user device may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. A user device for communication in a wireless communication system (500), the user device (100) comprising a transceiver (110) configured for group communication with other user devices (100a, 100b,..., 100n) of a first group, wherein the first group is a non-network controlled communication group; the transceiver (110) further being configured to:
transmit or receive data to or from the other user devices (100a, 100b,..., 100n) on a first radio channel, wherein the first radio channel is a data channel; and
transmit or receive first transmit requests to or from the other user devices (100a, 100b,..., 100n) on a second radio channel, wherein each first transmit request is a request for data transmission on the first radio channel and wherein the second radio channel is a signalling channel
**characterized in that** the transceiver (110) further is configured to
receive second transmitter requests from user devices (300a, 300b,..., 300n) of a second group, wherein the second group is a network controlled communication group and wherein the second transmit requests are requests for transmission on the first radio channel, and
forward the second transmitter requests on the second radio channel to the other user devices (100a, 100b,..., 100n).

2. User device according to claim 1, wherein each first transmit request comprises an identity of a user device of the first group and a priority level.

3. User device according to claim 2, wherein the transceiver (110) further is configured to
coordinate data transmissions on the first radio channel based on the priority levels of received first transmission requests.

4. User device according to any of the preceding claims, wherein the transceiver (110) further is configured to
receive first transmit requests on the second radio channel while transmitting data on the first radio channel.

5. User device according to claim 2 and 4, wherein the transceiver (110) further is configured to
halt an ongoing data transmission on the first radio channel if a received first transmit request has a higher priority level than a priority level associated with the ongoing data transmission.

6. User device according to any of the preceding claims, wherein the transceiver (110) further is configured to
receive the first transmit requests on the second radio channel while receiving data on the first radio channel.

7. User device according to any of the preceding claims, wherein the transceiver (110) further is configured to
transmit or receive busy indications to or from the other user devices (100a, 100b,..., 100n) on the second radio channel, wherein each busy indication comprises an identity of a user device transmitting data on the first radio channel and a priority level.

8. User device according to claim 1, wherein the transceiver (110) further is configured to
forward received first transmitter requests to the user devices (300a, 300b,..., 300n) of the second group.

9. User device according to any of the preceding claims, wherein the first and the second radio channels are broadcast channels.

10. Method in a user device for communication in a wireless communication system (500), the user device (100) being configured for group communication with other user devices (100a, 100b,..., 100n) of a first group, wherein the first group is a non-network controlled communication group; the method comprising the steps of:
transmitting or receiving (200) data to or from the other user devices (100a, 100b,..., 100n) on a first radio channel, wherein the first radio channel is a data channel; and
transmitting or receiving (210) first transmit requests to or from the other user devices (100a, 100b,..., 100n) on a second radio channel, wherein each first transmit request is a request for data transmission on the first radio channel and wherein the second radio channel is a signalling channel, the method further comprising receiving second transmitter requests from user devices (300a, 300b,..., 300n) of a second group, wherein the second group is a network controlled communication group and wherein the second transmit requests are requests for transmission on the first radio channel, and forwarding the second transmitter requests on the second radio channel to the other user devices (100a, 100b,..., 100n).

11. Computer program comprising instructions which, when the program is executed by a computer, cause the computer to carry out the steps of the method of claim 10.

## Patentansprüche

1. Benutzervorrichtung für eine Kommunikation in einem drahtlosen Kommunikationssystem (500), wobei die Benutzervorrichtung (100) einen Sendeempfänger (110) umfasst, der für eine Gruppenkommunikation mit anderen Benutzervorrichtungen (100a, 100b,..., 100n) einer ersten Gruppe ausgelegt ist, wobei die erste Gruppe keine netzwerkgesteuerte Kommunikationsgruppe ist; wobei der Sendeempfänger (110) ferner zu Folgendem ausgelegt ist:
Übertragen oder Empfangen von Daten zu bzw. von den anderen Benutzervorrichtungen (100a, 100b,..., 100n) auf einem ersten Funkkanal, wobei der erste Funkkanal ein Datenkanal ist; und
Übertragen oder Empfangen erster Übertragungsanforderungen zu bzw. von den anderen Benutzervorrichtungen (100a, 100b,..., 100n) auf einem zweiten Funkkanal, wobei jede erste Übertragungsanforderung eine Anforderung für eine Datenübertragung auf dem ersten Funkkanal ist und wobei der zweite Funkkanal ein Signalisierungskanal ist
**dadurch gekennzeichnet, dass** der Sendeempfänger (110) ferner zu Folgendem ausgelegt ist
Empfangen zweiter Senderanforderungen von Benutzervorrichtungen (300a, 300b,..., 300n) einer zweiten Gruppe, wobei die zweite Gruppe eine netzwerkgesteuerte Kommunikationsgruppe ist und wobei die zweiten Übertragungsanforderungen Anforderungen zum Übertragen auf dem ersten Funkkanal sind, und
Weiterleiten der zweiten Senderanforderungen auf dem zweiten Funkkanal an die anderen Benutzervorrichtungen (100a, 100b,..., 100n).

2. Benutzervorrichtung nach Anspruch 1, wobei jede erste Übertragungsanforderung eine Identität einer Benutzervorrichtung der ersten Gruppe und eine Prioritätsstufe umfasst.

3. Benutzervorrichtung nach Anspruch 2, wobei der Sendeempfänger (110) ferner zu Folgendem ausgelegt ist
Koordinieren von Datenübertragungen auf dem ersten Funkkanal auf Basis der Prioritätsstufen der empfangenen ersten Übertragungsanforderungen.

4. Benutzervorrichtung nach einem der vorhergehenden Ansprüche, wobei der Sendeempfänger (110) ferner zu Folgendem ausgelegt ist
Empfangen von ersten Übertragungsanforderungen auf dem zweiten Funkkanal, während auf dem ersten Funkkanal Daten übertragen werden.

5. Benutzervorrichtung nach Anspruch 2 und 4, wobei der Sendeempfänger (110) ferner zu Folgendem ausgelegt ist
Anhalten einer laufenden Datenübertragung auf dem ersten Funkkanal, wenn eine empfangene erste Übertragungsanforderung eine höhere Prioritätsstufe aufweist als eine Prioritätsstufe, die mit der laufenden Datenübertragung verknüpft ist.

6. Benutzervorrichtung nach einem der vorhergehenden Ansprüche, wobei der Sendeempfänger (110) ferner zu Folgendem ausgelegt ist
Empfangen der ersten Übertragungsanforderungen auf dem zweiten Funkkanal, während auf dem ersten Funkkanal Daten empfangen werden.

7. Benutzervorrichtung nach einem der vorhergehenden Ansprüche, wobei der Sendeempfänger (110) ferner zu Folgendem ausgelegt ist
Übertragen oder Empfangen von Besetztanzeigen zu bzw. von den anderen Benutzervorrichtungen (100a, 100b,..., 100n) auf dem zweiten Funkkanal, wobei jede Besetztanzeige eine Identität einer Benutzervorrichtung, die Daten auf dem ersten Funkkanal überträgt, und eine Prioritätsstufe umfasst.

8. Benutzervorrichtung nach Anspruch 1, wobei der Sendeempfänger (110) ferner zu Folgendem ausgelegt ist
Weiterleiten von empfangenen ersten Senderanforderungen an die Benutzervorrichtungen (300a, 300b,..., 300n) der zweiten Gruppe.

9. Benutzervorrichtung nach einem der vorhergehenden Ansprüche, wobei der erste und der zweite Funkkanal Rundsendekanäle sind.

10. Verfahren in einer Benutzervorrichtung für eine Kommunikation in einem drahtlosen Kommunikationssystem (500), wobei die Benutzervorrichtung (100) für eine Gruppenkommunikation mit anderen Benutzervorrichtungen (100a, 100b,..., 100n) einer ersten Gruppe ausgelegt ist, wobei die erste Gruppe keine netzwerkgesteuerte Kommunikationsgruppe ist; wobei das Verfahren die folgenden Schritte umfasst:
Übertragen oder Empfangen (200) von Daten zu bzw. von den anderen Benutzervorrichtungen (100a, 100b,..., 100n) auf einem ersten Funkkanal, wobei der erste Funkkanal ein Datenkanal ist; und
Übertragen oder Empfangen (210) erster Übertragungsanforderungen zu bzw. von den anderen Benutzervorrichtungen (100a, 100b,..., 100n) auf einem zweiten Funkkanal, wobei jede erste Übertragungsanforderung eine Anforderung für eine Datenübertragung auf dem ersten Funkkanal ist und wobei der zweite Funkkanal ein Signalisierungskanal ist, wobei das Verfahren ferner das Empfangen von zweiten Senderanforderungen von Benutzervorrichtungen (300a, 300b,..., 300n) einer zweiten Gruppe umfasst, wobei die zweite Gruppe eine netzwerkgesteuerte Kommunikationsgruppe ist und wobei die zweiten Übertragungsanforderungen Anforderungen zur Übertragung auf dem ersten Funkkanal sind, und Weiterleiten der zweiten Senderanforderungen auf dem zweiten Funkkanal an die anderen Benutzervorrichtungen (100a, 100b,..., 100n).

11. Computerprogramm, das Anweisungen umfasst, die, wenn das Programm von einem Computer ausgeführt wird, den Computer veranlassen, die Schritte des Verfahrens nach Anspruch 10 umzusetzen.

## Revendications

1. Dispositif utilisateur destiné à une communication dans un système de communication sans fil (500), le dispositif utilisateur (100) comprenant un émetteur-récepteur (110) configuré pour grouper une communication avec d'autres dispositifs utilisateurs (100a, 100b,..., 100n) d'un premier groupe, dans lequel le premier groupe est un groupe de communications non commandé par réseau ; l'émetteur-récepteur (110) étant configuré en outre pour :
transmettre ou recevoir des données vers ou à partir d'autres dispositifs utilisateurs (100a, 100b,..., 100n) sur un premier canal radio, dans lequel le premier canal radio est un canal de données ; et
transmettre ou recevoir des premières demandes de transmission vers ou à partir d'autres dispositifs utilisateurs (100a, 100b,... 100n) sur un second canal radio, dans lequel chaque première demande de transmission est une demande pour une transmission de données sur le premier canal radio, et le second canal radio étant un canal de signalisation
**caractérisé en ce que** l'émetteur-récepteur (110) est configuré en outre pour :
recevoir des secondes demandes d'émetteur provenant de dispositifs utilisateurs (300a, 300b,..., 300n) d'un second groupe, dans lequel le second groupe est un groupe de communications commandé par réseau, et les secondes demandes de transmission sont des demandes pour une transmission sur le premier canal radio, et
transférer les secondes demandes d'émetteur sur le second canal radio aux autres dispositifs utilisateurs (100a, 100b,..., 100n).

2. Dispositif utilisateur selon la revendication 1, dans lequel chaque première demande de transmission comprend une identité d'un dispositif utilisateur du premier groupe et un niveau de priorité.

3. Dispositif utilisateur selon la revendication 2, dans lequel l'émetteur-récepteur (110) est configuré en outre pour coordonner des transmissions de données sur le premier canal radio sur la base des niveaux de priorité des premières demandes de transmission reçues.

4. Dispositif utilisateur selon l'une quelconque des revendications précédentes, dans lequel l'émetteur-récepteur (110) est configuré en outre pour :
recevoir des premières demandes de transmission sur le second canal radio tout en transmettant des données sur le premier canal radio.

5. Dispositif utilisateur selon les revendications 2 et 4, dans lequel l'émetteur-récepteur (110) est configuré en outre pour :
arrêter une transmission de données sortantes sur le premier canal radio si une première demande de transmission reçue a un niveau de priorité supérieur à un niveau de priorité associé à la transmission de données sortantes.

6. Dispositif utilisateur selon l'une quelconque des revendications précédentes, dans lequel l'émetteur-récepteur (110) est configuré en outre pour :
recevoir les premières demandes de transmission sur le second canal radio tout en recevant des données sur le premier canal radio.

7. Dispositif utilisateur selon l'une quelconque des revendications précédentes, dans lequel l'émetteur-récepteur (110) est configuré en outre pour :
transmettre ou recevoir des indications d'occupation vers ou à partir d'autres dispositifs utilisateurs (100a, 100b,..., 100n) sur le second canal radio, dans lequel chaque indication d'occupation comprend une identité d'un dispositif utilisateur transmettant des données sur le premier canal radio et un niveau de priorité.

8. Dispositif utilisateur selon la revendication 1, dans lequel l'émetteur-récepteur (110) est configuré en outre pour :
transférer les premières demandes d'émetteur reçues aux dispositifs utilisateurs (300a, 300b,..., 300n) du second groupe.

9. Dispositif utilisateur selon l'une quelconque des revendications précédentes, dans lequel le premier et le second canal radio sont des canaux de diffusion.

10. Procédé dans un dispositif utilisateur pour une communication dans un système de communication sans fil (500), le dispositif utilisateur (100) étant configuré pour grouper une communication avec d'autres dispositifs utilisateurs (100a, 100b,..., 100n) d'un premier groupe, dans lequel le premier groupe est un groupe de communications non commandé par réseau ; le procédé comprenant les étapes consistant à :
transmettre ou recevoir (200) des données vers ou à partir d'autres dispositifs utilisateurs (100a, 100b,..., 100n) sur un premier canal radio, dans lequel le premier canal radio est un canal de données ; et
transmettre ou recevoir (210) des premières demandes de transmission vers ou à partir d'autres dispositifs utilisateurs (100a, 100b,..., 100n) sur un second canal radio, dans lequel chaque première demande de transmission est une demande pour une transmission de données sur le premier canal radio, et le second canal radio étant un canal de signalisation, le procédé consistant en outre à recevoir des secondes demandes d'émetteur provenant de dispositifs utilisateurs (300a, 300b,..., 300n) d'un second groupe, dans lequel le second groupe est un groupe de communications commandé par réseau, et les secondes demandes de transmission étant des demandes pour une transmission sur le premier canal radio, et transférer les secondes demandes d'émetteur sur le second canal radio aux autres dispositifs utilisateurs (100a, 100b,..., 100n).

11. Programme informatique comprenant des instructions qui, lorsque le programme est exécuté par un ordinateur, amènent l'ordinateur à mettre en oeuvre les étapes du procédé selon la revendication 10.
